# EUROPEAN PATENT APPLICATION

(11) **EP 4 190 467 A1**
(43) Date of publication of application: **07.06.2023**
(21) Application number: 21212278.2
(22) Date of filing: 03.12.2021
(51) Int. Cl.: B22F 10/38, B29C 64/153, B29C 64/241, B29C 64/245, B33Y 10/00, B33Y 30/00, B22F 10/28, B22F 10/85

(54) **METHOD AND MACHINE FOR ADDITIVE MANUFACTURING OF MATERIALS**

(71) Applicant: Siemens Aktiengesellschaft, 80333 München (DE)
(72) Inventor: Ludwig, Christoph Ernst, 81673 München (DE); Manvelyan, Diana, 80807 München (DE); Paffrath, Meinhard, 85622 Feldkirchen (DE); Wever, Utz, 82319 Starnberg (DE)
(74) Representative: Siemens Patent Attorneys

(57) **Abstract**

In order to additive manufacture materials without any additive manufacturing constraints restricted or limited due to a design of additive manufactured objects, it is proposed based on a "Powder Bed Fusion <PBF>"-technique by way of sintering (stg) or melting (mlt) controlled according to a simulation model (SMM) powder material (PM), being fillable into a powder material bed (PMB), to tilt (tlt) controlled according to the simulation model (SMM) a build platform (BPF) of the powder material bed (PMB), in which due to the sintered (stg) or melted (mlt) powder material (PM) an additive manufactured object (OBJ) is built up layer by layer on the build platform (BPF), within a cavity (CVT) of an additive manufacturing machine (AMM) in a tiltable clockwise (tcw) or tiltable counter-clockwise (tccw) manner such that during the layer by layer build-up an overhang angle (OHA, OHA', OHA") as a maximum allowable additive manufacturing angle (AMAₘₐᵢₗ, AMA'ₘᵢₐₗ, AMA"ₘᵢₐₗ) either referring to an additive manufacturing level (AML) is not undershot ("OPT1") or referring to an additive manufacturing direction (AMD) is not exceeded ("OPT2").

## Description

The invention refers to a method for additive manufacturing of materials according to the preamble claim 1 and a machine for additive manufacturing of materials according to the preamble claim 8.

Additive manufacturing sometimes also called as or including 3D-or inter alia 4D-printing, is a manufacturing process, which uses materials, such as metals, alloys or polymers, to build up layer by layer structures of an additive manufactured object or the object itself.

According to https://en.wikipedia.org/wiki/3D_printing in the version of November 16, 2021 with reference to a ISO/ASTM52900-15 standardization paper of the International Organization for Standardization <ISO> respectively the American Society for Testing and Materials <ASTM> there are defined seven categories of additive manufacturing processes within its meaning: binder jetting, directed energy deposition, material extrusion, material jetting, powder bed fusion, sheet lamination, and vat photopolymerization.

In the context of the present invention Powder Bed Fusion techniques <PBF> including several processes such as Selective Laser Sintering <SLS>, Selective Laser Melting <SLM> and Electron-Beam Melting <EBM>, are considered more closely. Powder Bed Fusion processes can be used with numerous materials, such as metals alloy and polymers, and their flexibility allows a build-up for geometrically complex objects or structures and is based primarily on sintering or melting.

There are certain limitations with respect to a design of the object to be manufactured or a part thereof. One of those limitations is that it is not wanted if not impossible sometimes to additive manufacture or print objects or structures with large angles beyond an overhang angle as those are generally not self-supporting. A definition of the term overhang angle is given in [1] to [2].

General remarks regarding the principle of the Powder Bed Fusion process, in particular the SLM-process, is given and illustrated according to the following YouTube-link https://www.youtube.com/watch?v=te9OaSZ0kf8 ("New method of manufacturing using powder bed: Additive Manufacturing with Selective Laser Melting").

From literature it can be assumed that overhang angles up to a critical angle, e.g. often 45°, can be manufactured with a Powder Bed Fusion technique <PBF> (cf. [1]). Larger angles are possible but have a negative effect on the surface properties (cf. [2]). In the past it was suggested to change a scan angle to be able to print larger overhang angles (cf [2]).

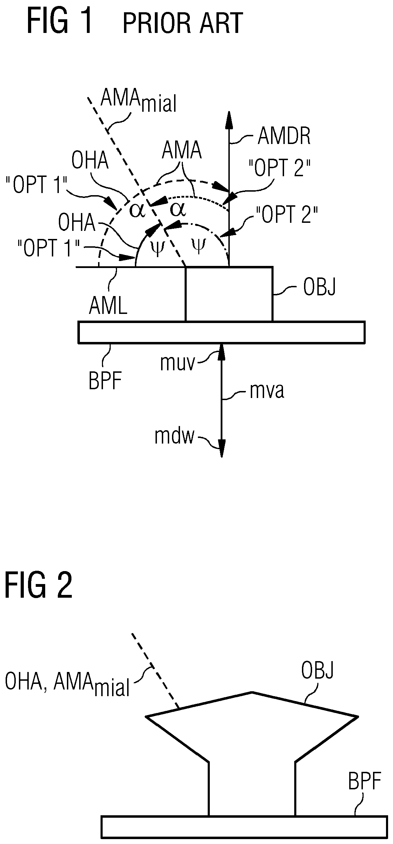

FIGURE 1 - as state of art -illustrates this problem. To build up an additive manufactured object OBJ on a build platform BPF by the Powder Bed Fusion technique <PBF> many materials, e.g. the cited ones above, can be used or manufactured additively. In conventional additive manufacturing machines or 3D printers using the PBF-technique the build platform BPF is moveable mva vertically such as downwards mdw or upwards muw in order to apply a new layer of powder in a power bed.

The build-up of the additive manufactured object OBJ however can be only established if (**i**) according to a first option "OP1" an additive manufacturing angle AMA given by "α" and referring to an additive manufacturing level AML is larger than or equal to a critical overhang angle OHA given by "Ψ", which means that "α≥Ψ" or in other words the critical overhang angle OHA referring to the additive manufacturing level AML is not undershot or if (**ii**) according to a second option "OP2" an additive manufacturing angle AMA given by "α" and referring to an additive manufacturing direction AMDR is smaller than or equal to a critical overhang angle OHA given by "Ψ", which means that "α≤Ψ" or in other words the critical overhang angle OHA referring to the additive manufacturing direction AML is not exceeded. By the "Ψ" for the critical overhang angle OHA it is defined an overhang angle constraint, which is given by a maximum allowable additive manufacturing angle AMAₘₐᵢₗ of the additive manufacturing angle AMA. This angle is represented by a dashed line in the FIGURE 1. The illustrated problem implies restriction or limitations for a design of the object to be manufactured additively and for the additive manufacturing process.

From a state of art according to [3] it is known that the additive manufactured materials to manufacture an additive manufactured object or structures thereof are added layer by layer during the additive manufacturing process to support overhang angles below the critical overhang angle "Ψ" (*cf. first option "OPT1"*)*.* They are removed after the additive manufacturing process in an additional post-processing step. To further mitigate angle restrictions and limit a number of necessary support structures, the orientation of a part of the object to be manufactured additively is typically selected carefully before the additive manufacturing process.

Moreover, limiting constraints are typically taken into consideration during the design of the part. This way it is possible to include those restrictions into the part requirements. This approach may lead to manufacturable parts but may restrict freedom in the design of the object or the part thereof.

According to a granted European Patent EP 2989514 B1 it is described an optimal placement and orientation of a part including simulation of stresses and a part displacement during the additive manufacturing process or printing process. No variation of a PBF-based additive manufacturing angle or a printing bed angle during the additive manufacturing process is considered therein.

It is an objective of the invention to propose a method and machine for additive manufacturing of materials, in which the material can be manufactured additively without any additive manufacturing constraints restricted or limited due to a design of additive manufactured objects.

This objective is solved with regard to a method defined in the preamble of claim 1 by the features in the characterizing part of claim 1.

Moreover the objective is solved with regard to a machine defined in the preamble of claim 8 by the features in the characterizing part of claim 8.

The main idea of the invention according to the claims 1 and 8 in order to additive manufacture powder material based on a "Powder Bed Fusion <PBF>"-technique by way of sintering or melting controlled according to a simulation model the powder material, being fillable into a powder material bed, a build platform of the powder material bed, in which due to the sintered or melted powder material an additive manufactured object is built up layer by layer on the build platform, is tilted and thereby controlled according to the simulation model within a cavity of an additive manufacturing machine in a tiltable clockwise or tiltable counter-clockwise manner such that during the layer by layer build-up an overhang angle as a maximum allowable additive manufacturing angle either referring to an additive manufacturing level is not undershot or referring to an additive manufacturing direction is not exceeded.

Due to the described tilting of the build platform of the powder material bed the necessity of additional supporting structures or postprocessing measures regarding the "Powder Bed Fusion <PBF>"-technique can be avoided. This yields two significant advantages:
- Less scrap powder material. The support structure usually cannot be reused and are discarded.
- Less postprocessing time. Additional time is needed to remove superfluous support structures. After removal, additional surface treatment might be necessary.

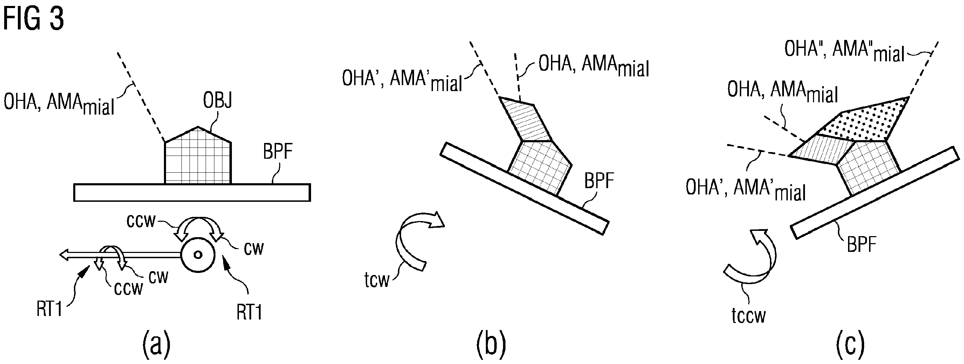

The fundamental technical feature are (**i**) the tiltable build platform of the powder material bed, which means that the build platform can rotate around one or more axes (cf. FIGURE 3), and (**ii**) the (a priori) simulation model including a digital-twin of the object to be additive manufactured for the additive manufacturing process based on the "Powder Bed Fusion <PBF>"-technique that is able to consider the tilts or rotations of the build platform to build up the object.

The invention uses - with respect to description of the FIGURE 1 - the fact that the critical overhang angle OHA given by "Ψ" is always measured with respect to the additive manufacturing direction which, in turn, always points vertically downwards. By tilting or rotating the printing bed and the object to be additive manufactured, the additive manufacturing angle constraint can effectively be alleviated (cf. FIGURE 3).

Further advantages arise out of the dependent claims in which according to the claims 2 and 9 it is beneficial that the build platform includes a deformable sealing to enable a form-fitting in the cavity and to seal the powder material bed during its being moveable downwards or moveable upwards and during the tilting of the build platform for avoiding a leaking of the powder material.

In this context is advantageous according to the claims 3 and 10 when the build platform of the powder material bed and the cavity of the additive manufacturing machine are preferably formed rectangular or circular.

Moreover it is beneficial when according to the claims 4 and 11 the powder material is a metal or an alloy or when alternatively according to the claims 5 and 12 the powder material is a polymer.

Besides that it is meaningful or useful when according to the claims 6 and 13 the sintering or melting is done by a Laser or when alternatively according to the claims 7 and 14 the sintering or melting is done by an electron-beam.

Moreover, advantageous further developments of the invention arise out of the following description of a preferred embodiment of the invention and based on the FIGURE 1 showing a state of art according to FIGURES 2 to 11. They show:
FIGURE 2 an additive manufactured object, which in comparison to that of the FIGURE 1 has to be additive manufactured further,
FIGURE 3 fundamental additive manufacturing phases (a) to (c) of the additive manufactured object to be additive manufactured in order to achieve a build-up of the additive manufactured object according to the FIGURE 2,
FIGURES 4 to 11 an additive manufacturing process for different process states based each on the "Powder Bed Fusion <PBF>"-technique with an additive manufacturing machine AMM for additive manufacturing materials.
FIGURE 2 shows the additive manufactured object OBJ, which in comparison to that one of the FIGURE 1 has to be additive manufactured further. This further additive manufacturing, where the additive manufactured object OBJ finally manufactured is built up on the build platform BPF, violates the critical overhang angle OHA respectively the maximum allowable additive manufacturing angle AMAₘₐᵢₗ of the additive manufacturing angle AMA. If this not the case, the additive manufactured object OBJ, which in comparison to that one of the
FIGURE 1 has to be additive manufactured further, cannot be manufactured directly without employing additional supporting structures or postprocessing measures regarding the "Powder Bed Fusion <PBF>"-technique.
FIGURE 3 shows fundamental additive manufacturing phases (a) to (c) of the additive manufactured object OBJ in order to achieve a build-up of the additive manufactured object OBJ according to the FIGURE 2, where the additive manufactured object OBJ finally manufactured is built up on the build platform BPF such that the critical overhang angle OHA respectively the maximum allowable additive manufacturing angle AMAₘₐᵢₗ of the additive manufacturing angle AMA is not violated (non-violating a maximum additive manufacturing angle constraint) .

In order to achieve this, the following has to be done:
Firstly, the additive manufactured object OBJ is built up according to a first depicted fundamental additive manufacturing phase (a) for example so far as depicted by a checkered part of the additive manufactured object OBJ. Furthermore the build platform BPF with the checkered part of the additive manufactured object OBJ can rotate around two axes each clockwise cw or counter-clockwise ccw.

According to a first rotation RT1, when the build platform BPF is rotated clockwise cw, the build platform BPF with the checkered part of the additive manufactured object OBJ is built up on the build platform BPF is tilted into the drawing plane, whereas, when the build platform BPF is rotated counter-clockwise ccw, the build platform BPF with the checkered part of the additive manufactured object OBJ built up on the build platform BPF is tilted out of the drawing plane .

According to a second rotation RT2, when the build platform BPF is rotated clockwise cw, the build platform BPF with the checkered part of the additive manufactured object OBJ built up on the build platform BPF is tilted to the right as depicted in (b) of the FIGURE 3, whereas, when the build platform BPF is rotated counter-clockwise ccw, the build platform BPF with the checkered part of the additive manufactured object OBJ built up on the build platform BPF is tilted to the left as depicted in (c) of the FIGURE 3.

Secondly, the additive manufactured object OBJ is built up further according to a second depicted fundamental additive manufacturing phase (b). In order to build up on the checkered part of the additive manufactured object OBJ a lined part of the additive manufactured object OBJ on the build platform BPF without violating the critical overhang angle OHA respectively the maximum allowable additive manufacturing angle AMAₘₐᵢₗ of the additive manufacturing angle AMA the build platform BPF is rotated clockwise cw according to the second rotation RT2 so that the build platform BPF with the checkered part of the additive manufactured object OBJ built up on the build platform BPF is tilted to the right as depicted in (b) of the FIGURE 3.

Due to the fact that the build platform BPF is rotated clockwise cw according to the second rotation RT2 the critical overhang angle OHA respectively the maximum allowable additive manufacturing angle AMAₘₐᵢₗ is no longer critical and according to the cited clockwise rotation a changed (new) overhang angle OHA' respectively a changed maximum allowable additive manufacturing angle AMA*'*ₘₐᵢₗ of the additive manufacturing angle AMA becomes the critical one.

While the critical overhang angle OHA respectively the maximum allowable additive manufacturing angle AMAₘₐᵢₗ would have been violated due to the built-up of the lined part of the additive manufactured object OBJ on the build platform BPF the changed (new) overhang angle OHA' respectively the changed (new) maximum allowable additive manufacturing angle AMA*'*ₘₐᵢₗ is not violated (non-violating the maximum additive manufacturing angle constraint). So it is not necessary to employ additional supporting structures or postprocessing measures regarding the "Powder Bed Fusion <PBF>"-technique.

Thirdly, the additive manufactured object OBJ is built up again further according to a second depicted fundamental additive manufacturing phase (c). In order to build up on the checkered part and the lied part of the additive manufactured object OBJ a punctured part of the additive manufactured object OBJ on the build platform BPF without violating the critical overhang angle OHA respectively the maximum allowable additive manufacturing angle AMAₘₐᵢₗ of the additive manufacturing angle AMA the build platform BPF is rotated now from the rotating position in the FIGURE 2 counter-clockwise ccw according to the second rotation RT2 so that the build platform BPF with the checkered part and the lined part of the additive manufactured object OBJ built up on the build platform BPF is tilted to the left as depicted in (c) of the FIGURE 3.

Due to the fact that the build platform BPF is rotated now counter-clockwise ccw according to the second rotation RT2 the critical overhang angle OHA respectively the maximum allowable additive manufacturing angle AMAₘₐᵢₗ and the changed (new) overhang angle OHA' respectively the changed (new) maximum allowable additive manufacturing angle AMA*'*ₘₐᵢₗ are no longer critical, but according to the cited counter-clockwise rotation an due to the built-up of the punctured part of the of the additive manufactured object OBJ a further changed (further new) overhang angle OHA*"* respectively a further changed (further new) maximum allowable additive manufacturing angle AMA*'*ₘₐᵢₗ of the additive manufacturing angle AMA becomes the critical one, which has to be considered so that the further changed (further new) overhang angle OHA*"* respectively the further changed (further new) maximum allowable additive manufacturing angle AMA*"*ₘₐᵢₗ is not violated (non-violating the maximum additive manufacturing angle constraint). Thus it is again not necessary to employ additional supporting structures or postprocessing measures regarding the "Powder Bed Fusion <PBF>"-technique.

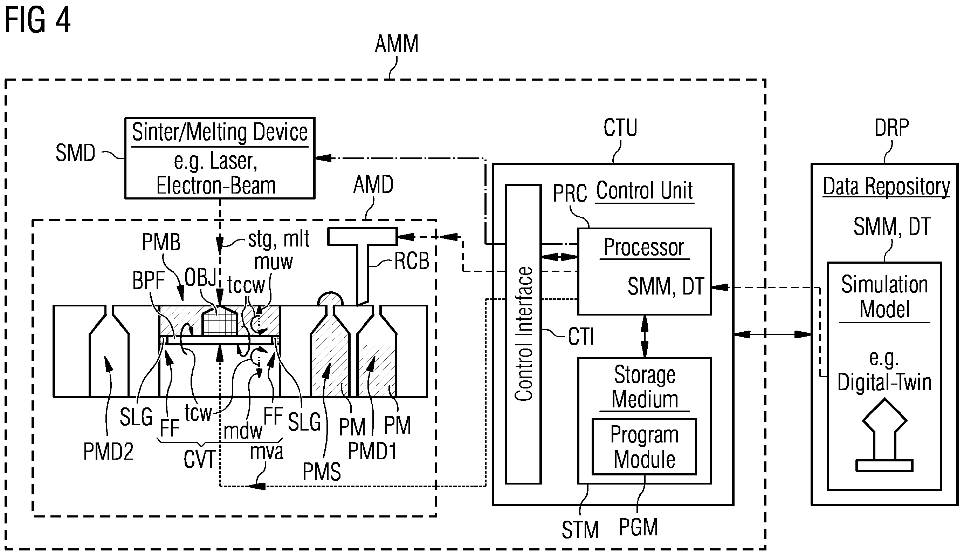

FIGURES 4 to 11 show an additive manufacturing process for different process states based each on the "Powder Bed Fusion <PBF>"-technique - for example a Direct Metal Laser Sintering <DMLS>, which is one of the most frequently used additive Manufacturing processes, where the additive manufactured parts naturally stick to a powder material bed so that this adhesion can be used for bed rotation, such that no additional fixation of the additive manufactured part is necessary - with an additive manufacturing machine AMM for additive manufacturing materials.

According to the FIGURE 4 the additive manufacturing machine AMM includes an additive manufacturing device AMM, a sinter/melting device SMD and a control unit CTU.

In order to implement a "Powder Bed Fusion <PBF>"-technique with the additive manufacturing machine AMM the cited machine components form a functional unit for the additive manufacturing. For this purpose the cited machine components are designed as follows:
1. The additive manufacturing device AMM, which is depicted in the FIGURES 4 to 11 in a cross-sectional view includes
   - a cavity CVT, in which a powder material bed PMB, where powder material PM can be filled in, is formed due to a cavity interior wall and a build platform BPF, which
      -- is moveable mva downwards mdw or moveable mva upwards muw in the cavity CVT thereby changing a filling volume of the powder material bed PMB,
      -- with respect to the FIGURE 3-(a) with the corresponding description and according to the described and depicted rotations RT1, RT2 around the two axes is tiltable clockwise tcw or tiltable counter-clockwise tccw, and
      -- includes a deformable sealing SLG to enable a form-fitting FF in the cavity CVT and to seal the powder material bed PMB during its being moveable mva downwards mdw or moveable mva upwards muw and during the tilting tlt of the build platform BPF for avoiding a leaking of the powder material PM, wherein the cavity CVT and the build platform BPF are formed rectangular or circular,
   - a powder material supply PMS keeping the powder material PM,
   - two powder material disposals - a first powder material disposals PMD1 and a second powder material disposals PMD2 - for taking superfluous or excessive powder material of the additive manufacturing process as depicted in the FIGURES 4 to 11, and
   - a recoater blade RCB for filling the powder material PM from the powder material supply PMS keeping the powder material PM in a known way according to the "Powder Bed Fusion <PBF>"-technique.
2. The sinter/melting device SMD is used by way of sintering stg or melting mlt the powder material PM, which is done by a Laser or an electron-beam, in order to build up within the powder material bed PMB layer by layer the additive manufactured object OBJ to be manufactured additively on the build platform BPF.
3. The control unit CTU includes
   - a non-transitory, processor-readable storage medium STM having processor-readable program-instructions of a program module PGM stored in the non-transitory, processor-readable storage medium STM for carrying out a simulation model SMM including a digital-twin DT of the additive manufactured object OBJ to be manufactured additively, which are stored in a data repository DRP assigned to control unit CTU, and
   - a processor PRC connected with the storage medium STM executing the processor-readable program-instructions of the program module PGM excercising a control sovereignity of the control unit CTU by accessing to the simulation model SMM with the digital-twin DT stored in the data repository DRP and controlling via a control interface CTI of the control unit CTU the movement and tilting of the build platform BPF within the cavity CVT, the recoater blade RCB and the sinter/melting device SMD for sintering stg or melting mlt the powder material PM.

With respect to the FIGURE 4, according to the FIGURE 3-(a) and under the control sovereignty of the control unit CTU with the processor PRC the sinter/melting device SMD for sintering stg or melting mlt the powder material PM is controlled according to the simulation model SMM to build up the checkered part of the additive manufactured object OBJ on the build platform BPF.

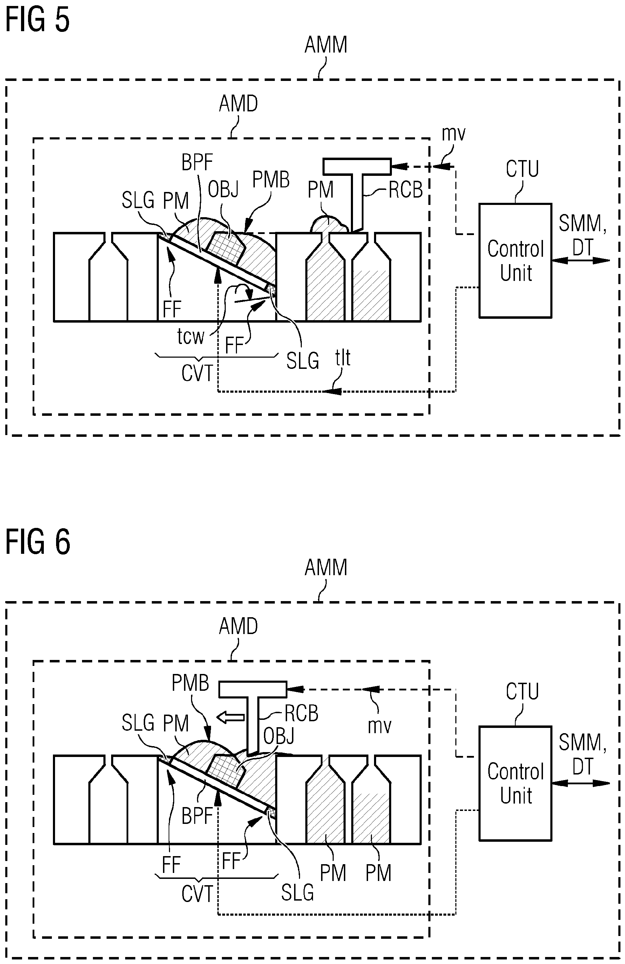

With respect to the FIGURE 5 and under the control sovereignty of the control unit CTU with the processor PRC, when the checkered part of the additive manufactured object OBJ is built up, the build platform BPF is tilted tlt according to the simulation model SMM in the clockwise tcw manner according to the FIGURE 3-(b) and the recoater RCB is moved mv according to the simulation model SMM to fill the tilted powder material bed PMB with the checkered part of the additive manufactured object OBJ on the tilted build platform BPF with further powder material PM from the powder material supply PMS.

The powder material is distributed by the recoater blade. If the build platform is not rotated respectively tilted, this distribution step is straightforward and state of the art. After the rotation respectively tilt of the tilted powder material bed with the checkered part of the additive manufactured object on the tilted build platform, the geometry changes and hence the requirements on the amount of additional powder material has changed. Those new requirements in added powder material need to be calculated by the simulation model.

With respect to the FIGURE 6 and under the control sovereignty of the control unit CTU with the processor PRC, when the tilted powder material bed PMB with the checkered part of the additive manufactured object OBJ on the tilted build platform BPF is filled with the further powder material PM, the recoater RCB is moved mv according to the simulation model SMM to remove the superfluous or excessive powder material PM from the tilted powder material bed PMB with the checkered part of the additive manufactured object OBJ on the tilted build platform BPF.

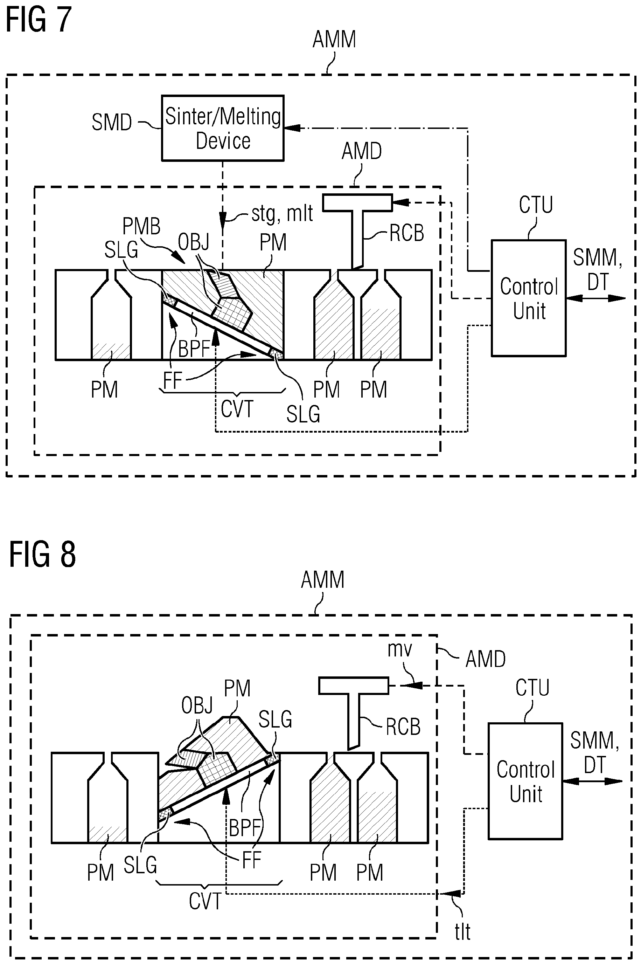

With respect to the FIGURE 7, according to the FIGURE 3-(b) and under the control sovereignty of the control unit CTU with the processor PRC, when the superfluous or excessive powder material PM from the tilted powder material bed PMB with the checkered part of the additive manufactured object OBJ on the tilted build platform BPF is removed, the sinter/melting device SMD for sintering stg or melting mlt the powder material PM is controlled according to the simulation model SMM to build up the lined part layer by layer on the horizontal surface of the additive manufactured object OBJ on the build platform BPF.

With respect to the FIGURE 8 and under the control sovereignty of the control unit CTU with the processor PRC, when the lined part of the additive manufactured object OBJ is built up, the build platform BPF is tilted tlt according to the simulation model SMM in the counter-clockwise tcw manner according to the FIGURE 3-(c) and the recoater RCB is moved mv according to the simulation model SMM to fill the tilted powder material bed PMB with the checkered and lined parts of the additive manufactured object OBJ on the tilted build platform BPF with further powder material PM from the powder material supply PMS.

The powder material is distributed by the recoater blade. If the build platform is not rotated respectively tilted, this distribution step is straightforward and state of the art. After the rotation respectively tilt of the tilted powder material bed with the checkered and lined parts of the additive manufactured object on the tilted build platform, the geometry changes and hence the requirements on the amount of additional powder material has changed. Those new requirements in added powder material need to be calculated by the simulation model.

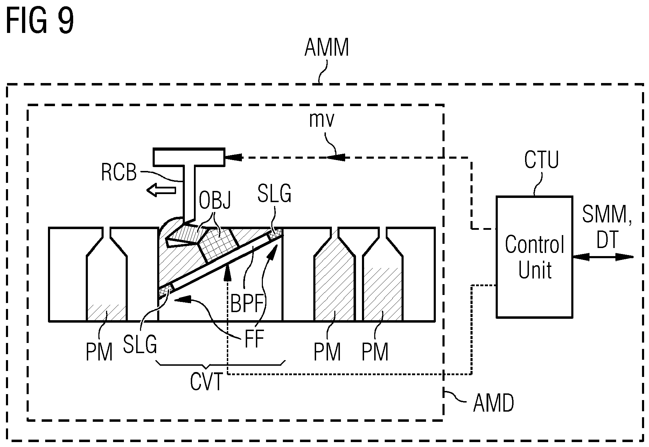

With respect to the FIGURE 9 and under the control sovereignty of the control unit CTU with the processor PRC, when the tilted powder material bed PMB with the lined part of the additive manufactured object OBJ on the tilted build platform BPF is filled with the further powder material PM, the recoater RCB is moved mv according to the simulation model SMM to remove the superfluous or excessive powder material PM from the tilted powder material bed PMB with the checkered and lined parts of the additive manufactured object OBJ on the tilted build platform BPF.

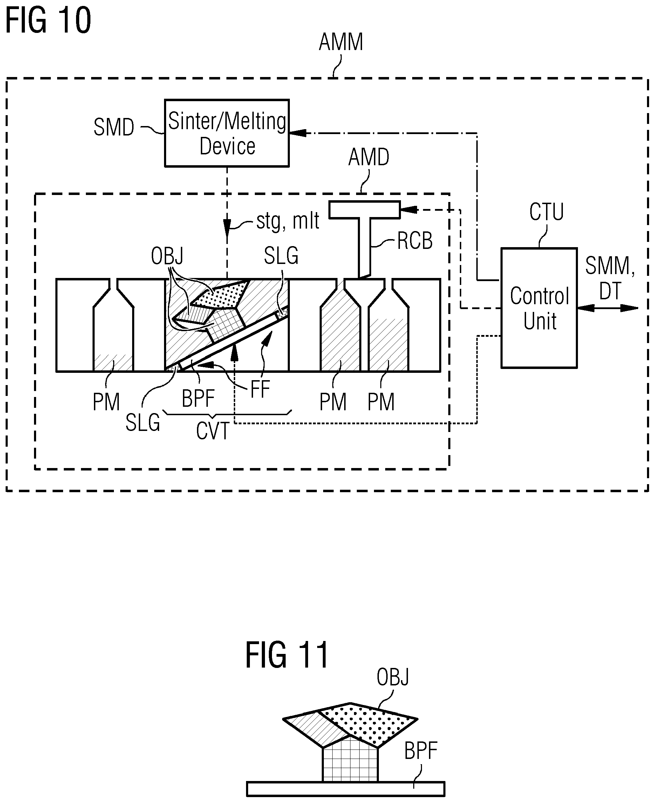

With respect to the FIGURE 10, according to the FIGURE 3-(c) and under the control sovereignty of the control unit CTU with the processor PRC, when the superfluous or excessive powder material PM from the tilted powder material bed PMB with the checkered part of the additive manufactured object OBJ on the tilted build platform BPF is removed, the sinter/melting device SMD for sintering stg or melting mlt the powder material PM is controlled according to the simulation model SMM to build up the punctured part layer by layer on the horizontal surface of the additive manufactured object OBJ on the build platform BPF.

FIGURE 11 shows with regard to the additive manufactured object OBJ to be manufactured additively and depicted in the FIGURE 2 the additive manufactured object OBJ built up with the three different parts - the checkered part, the lined part and the punctured part - according to additive manufacturing process based on the "Powder Bed Fusion <PBF>"-technique and depicted in the FIGURES 4 to 10.

### References:

[1] Calignano, F.: Design optimization of supports for overhanging structures in aluminum and titanium alloys by selective laser melting.
[2] Cloots, Michael & Zumofen, Livia & Spierings, Adriaan & Kirchheim, Andreas & Wegener, Konrad. (2017). Approaches to minimize overhang angles of SLM parts. Rapid Prototyping Journal. 23. 362-369. 10.1108/RPJ-05-2015-0061.
[3] Leutenecker, Bastian & Klahn, Christoph & Meboldt, Mirko. (2016). Considering Part Orientation in Design for Additive Manufacturing. Procedia CIRP. 50. 408-413.0.1016/j.procir.2016.05.016.

## Claims

1. Method for additive manufacturing materials, in which the additive manufacturing is based on a "Powder Bed Fusion <PBF>"-technique, wherein
- powder material (PM), which is fillable into a powder material bed (PMB) of an additive manufacturing machine (AMM), is used by way of sintering (stg) or melting (mlt) to build up within the powder material bed (PMB) layer by layer an additive manufactured object (OBJ) on a build platform (BPF) of the powder material bed (PMB), which is moveable (mva) downwards (mdw) or moveable (mva) upwards (muw) in a cavity (CVT) of the additive manufacturing machine (AMM) thereby changing a filling volume of the powder material bed (PMB) for the powder material (PM), and
- the sintering or melting based build-up is executed and controlled according to a simulation model (SMM) including a digital-twin (DT) of the additive manufactured object (OBJ), **characterized by**:
according to the simulation model (SMM) controlled tilting (tlt) the build platform (BPF), which is tiltable clockwise (tcw) or tiltable counter-clockwise (tccw), within the cavity (CVT) such that during the layer by layer build-up an overhang angle (OHA, OHA', OHA") as a maximum allowable additive manufacturing angle (AMAₘₐᵢₗ, AMA'ₘᵢₐₗ, AMA"ₘᵢₐₗ) either referring to an additive manufacturing level (AML) is not undershot ("OPT1") or referring to an additive manufacturing direction (AMDR) is not exceeded ("OPT2").

2. Method according to claim 1, **characterized in that** the build platform (BPF) includes a deformable sealing (SLG) to enable a form-fitting (FF) in the cavity (CVT) and to seal the powder material bed (PMB) during its being moveable (mva) downwards (mdw) or moveable (mva) upwards (muw) and during the tilting (tlt) of the build platform (BPF) for avoiding a leaking of the powder material (PM).

3. Method according to claim 1 or 2, **characterized in that**
the build platform (BPF) of the powder material bed (PMB) and the cavity (CVT) of the additive manufacturing machine (AMM) are formed rectangular or circular.

4. Method according to one of the claims 1 to 3, **characterized in that**
the powder material (PM) is a metal or an alloy.

5. Method according to one of the claims 1 to 4, **characterized in that**
the powder material (PM) is a polymer.

6. Method according to one of the claims 1 to 5, **characterized in that**
the sintering (stg) or melting (mlt) is done by a Laser.

7. Method according to one of the claims 1 to 5, **characterized in that**
the sintering (stg) or melting (mlt) is done by an electron-beam.

8. Machine for additive manufacturing materials (AMM), with a cavity (CVT) and a powder material supply (PMS) of an additive manufacturing device (AMD), a sinter/melting device (SMD) and a control unit (CTU), which form a functional unit for the additive manufacturing which is designed such that under the control sovereignty of the control unit (CTU) and based on a "Powder Bed Fusion <PBF>"-technique
- powder material (PM) is fillable into a powder material bed (PMB),
- the sinter/melting device (SMD) is used by way of sintering (stg) or melting (mlt) the powder material (PM) to build up within the powder material bed (PMB) layer by layer an additive manufactured object (OBJ) on the build platform (BPF), which is moveable (mva) downwards (mdw) or moveable (mva) upwards (muw) in the cavity (CVT) thereby changing a filling volume of the powder material bed (PMB) for the powder material (PM),and
- the sintering or melting based build-up is executed by the sinter/melting device (SMD) according to a simulation model (SMM) including a digital-twin (DT) of the additive manufactured object (OBJ) assigned to the control unit (CTU), **characterized by**:
tilting (tlt) under the control sovereignty of the control unit (CTU) according to the simulation model (SMM) the build platform (BPF), which is tiltable clockwise (tcw) or tiltable counter-clockwise (tccw), within the cavity (CVT) such that during the layer by layer build-up an overhang angle (OHA, OHA', OHA") as a maximum allowable additive manufacturing angle (AMAₘₐᵢₗ, AMA'ₘᵢₐₗ, AMA"ₘᵢₐₗ) either referring to an additive manufacturing level (AML) is not undershot ("OPT1") or referring to an additive manufacturing direction (AMDR) is not exceeded ("OPT2").

9. Machine (AMM) according to claim 7, **characterized in that**
the build platform (BPF) includes a deformable sealing (SLG) to enable a form-fitting (FF) in the cavity (CVT) and to seal the powder material bed (PMB) during its being moveable (mva) downwards (mdw) or moveable (mva) upwards (muw) and during the tilting (tlt) of the build platform (BPF) for avoiding a leaking of the powder material (PM).

10. Machine (AMM) according to claim 8 or 9, **characterized in that**
the build platform (BPF) of the powder material bed (PMB) and the cavity (CVT) of the additive manufacturing machine (AMM) are formed rectangular or circular.

11. Machine (AMM) according to one of the claims 8 to 10, **characterized in that**
the powder material (PM) is a metal or an alloy.

12. Machine (AMM) according to one of the claims 8 to 10, **characterized in that**
the powder material (PM) is a polymer.

13. Machine (AMM) according to one of the claims 8 to 12, **characterized in that**
the sinter/melting device (SMD) is designed such that the sintering (stg) or melting (mlt) is done by a Laser.

14. Machine (AMM) according to one of the claims 8 to 12, **characterized in that**
the sinter/melting device (SMD) is designed such that the sintering (stg) or melting (mlt) is done by an electron-beam.
